Europäisches Patentamt

European Patent Office

Office européen des brevets

(11) Publication number: 0 293 965 B1

# EUROPEAN PATENT SPECIFICATION

(45) Date of publication of patent specification: 17.06.92    (51) Int. Cl.5: **D03D 47/12**, F16H 25/16

(21) Application number: 88200967.3

(22) Date of filing: 16.05.88

(54) **Device for converting a uniform rotary motion into a reciprocating rotary motion, particularly adapted for use in textile looms.**

(30) Priority: 03.06.87 IT 2076987

(43) Date of publication of application:
07.12.88 Bulletin 88/49

(45) Publication of the grant of the patent:
17.06.92 Bulletin 92/25

(84) Designated Contracting States:
AT BE CH DE ES FR GB GR LI LU NL SE

(56) References cited:
FR-A- 2 099 494
FR-A- 2 105 459
GB-A- 2 177 429
JP-A-59 117 947

PATENT ABSTRACTS OF JAPAN, vol. 8, no.
238 (M-335)[1675], 31st October 1984.

(73) Proprietor: COLOMBO-FILIPPETTI S.r.l.
Via Rossini, 26
I-24040 Casirate d'Adda Bergamo(IT)

(72) Inventor: Colombo, Gian Franco
Via Dante Alighieri, 1
I-24040 Casirate d'Adda Bergamo(IT)

(74) Representative: Faraggiana, Vittorio, Dr. Ing.
et al
Ingg. Guzzi e Ravizza S.r.l. Via Boccaccio, 24
I-20123 Milano(IT)

## Description

The present invention relates to an improved device capable of converting a continuous rotary motion into a reciprocating rotary motion, where the axes of the two motions lie perpendicular to each other and in the same plane.

It is known that the organ of input power in a textile loom normally provides for a main drive shaft transversal to the loom.

In particular, the cams controlling the reed movement are mounted on this shaft; resting on the said cams are cam followers which oscillate with their axes parallel to that of the said shaft and which are solid with an arm that controls the reed movement, this being a reciprocating movement in the longitudinal direction of the loom.

In textile looms the movement of the weft thread picking gripper, this movement being transversal to the loom and thus perpendicular to the direction of the reed movement, has also to be derived from the main drive shaft. The gripper movement is also derived from the same shaft, through the agency of cams. The fact that the movement both of the reed and of the gripper is orthogonal makes it impossible to derive the gripper movement from the main transversal drive shaft by means of a direct linkage of the kind that can be used for controlling the reed. In order to control the gripper, an element must be moved with a reciprocating rotary motion with axis orthogonal to the direction of the main drive shaft and such reciprocating rotary motion can be converted into the rectilinear reciprocating movement of the weft thread picking gripper.

It has thus for example been proposed to derive from the main drive shaft a secondary shaft orthogonal thereto, using a bevel gear pair, and to mount the gripper movement control cams on the said secondary shaft. However, it is known to persons with ordinary skill in the art it is extremely disadvantageous to multiply the linkages for controlling the moving parts of a loom, inasmuch as these necessarily entail a degree of play and striking, especially when wear sets in.

An example of moltiplication of linkages can be seen in the GB-A-2 177 429 patent.

The GB-A-2 177 429 patent discloses that, in order to convert a rotary motion of a continuously rotatable shaft in a reciprocating motion of a gripper in the same plane of the shaft, said rotary motion has to be firstly converted, by plane cams, in a first reciprocating motion of a lever in a plane perpendicular to the axis of the shaft.

The direction of this reciprocating motion is then rotated of 90° by spherical plain bearings.

Finally, the resulting reciprocating rotary motion, in the desidered plane, is applied to a toothed sector which transmit it to the drive wheel. Such a solution clearly involves a complicated kinematic chain due to the necessity to carry on two mechanical transformations: precisely from continuous rotary to reciprocating motion and from reciprocating in a first plane to a reciprocating motion in a second plane.

The second transformation involves the use of spherical plain bearings which are subject to rapid wear, moreover introducing some clearances in the movements - these being amplified by the lever system.

An other drawback resides in the relatively small value of the angle of the reciprocating rotary motion (less than 45°) obtained by the plane cams-followers coupling.

The object of the present invention, therefore, is to derive, through the agency of a cam-profile coupling, a reciprocating rotary movement from a shaft rotating uniformly about an axis orthogonal to the axis of the oscillating movement. The rectilinear reciprocating movement peculiar to the weft thread picking gripper can in this way be readily derived from the organ having the said reciprocating movement. Another object of the invetion is to embody a direct coupling of the type mentioned such as permits a positive control of the complementary cam type.

Although essentially directed at deriving the movement of the weft thread picking gripper from the main drive shaft of a loom, the device according to the invention can be applied wherever it is necessary for the axes of rotation of a continuous rotary movement and a reciprocating rotary movement to be perpendicular, when it is indispensable to have elevated angles of oscillation of the derived movement, absence of transmission play in the event of high stresses and rotation speeds and when a complete control of accelerations and of the movement of the oscillating organ is called for.

The device according to the invention has been shown to be particularly affective in shuttleless textile looms, in respect of transmitting motion to the weft thread picking gripper, and the description that follows will for this reason make reference to such application, the possible general function of the device as mentioned above remaining unchanged.

According to the invention, the overall aforesaid object of embodying a device capable of converting a continuous rotary movement into a reciprocating rotary movement, where the axes of the two movements are perpendicular to each other, the previously mentioned functional requirements being at the same time satisfied, is attained by a device for converting a continuous rotary movement of a first shaft in a reciprocating rectilinear movement of a weft thread picking gripper in a textile loom, said gripper being solid with a element pushed by a chain of gears which engages with a sector gear oscillated through levers operated by the rotation of a cam driven by the first shaft characterized in that said cam is a spherical cam, on two complementary profiles of which there simultaneously act two cam sensors of a oscillating bellcrank lever which is pivoted, in an intermediate position between the said two sensors, to a second shaft lying in the same plane as the shaft and perpendicular thereto, said oscillating lever being operationally connected to said gear sector.

The structural and functional characteristics of the invention, and its advantages over the known art, will become more apparent from the following illustrative and not limiting description thereof, referred to the appended diagrammatic drawings which show a control device according to the invention applied to a textile loom. In the drawings:

- Figure 1 is a perspective view illustrating the device of the invention adopted to control the movement of the weft thread picking gripper in a textile loom;

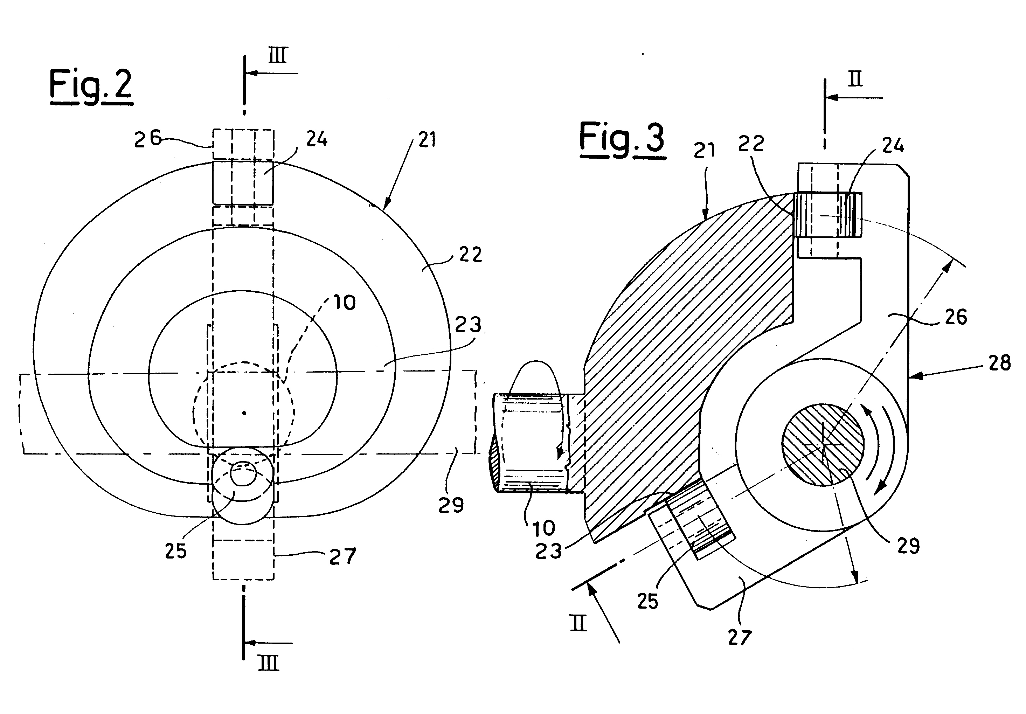

- Figure 2 is an elevational view taken on the line II-II of Figure 3; and
- Figure 3 is a section taken on the line III-III of Figure 2.

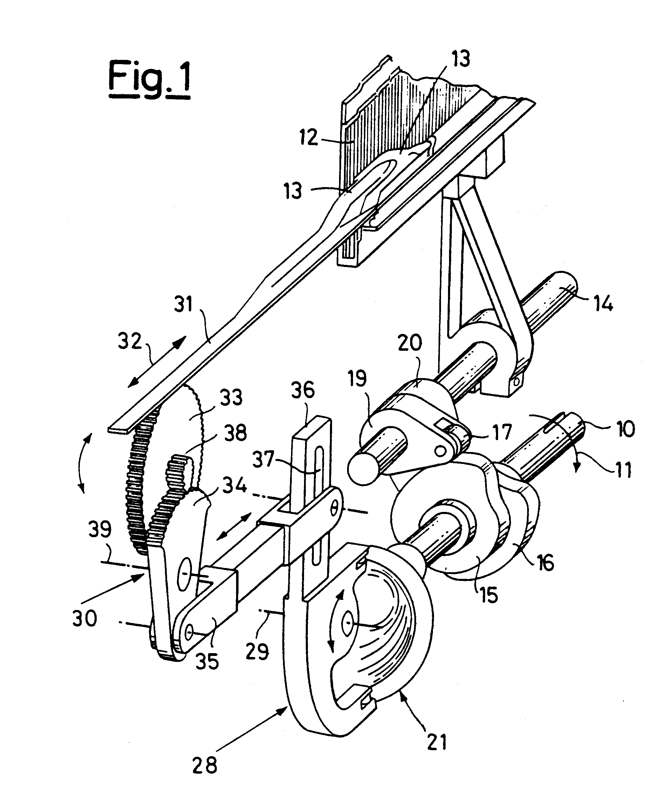

With reference to Figure 1 of the drawings, the numeral 10 indicates a main drive shaft of a textile loom, controlled to rotate continuously in the direction of the arrow 11, from which main drive shaft is derived the motion of actuating in synchrony a reed 12 and a weft thread picking gripper 13.

In a manner per se known, the oscillating motion of the reed 12, which is solid with a shaft 14 parallel to the shaft 10, is obtained through the agency of a pair of complementary cams 15, 16 which act on respective cam sensor idle rollers 17, 18 which are mounted on arms 19, 20 solid with the shaft 14.

In accordance with the present invention, at the opposite end of the main drive shaft 10 a spherical cam 21 is fixed, through the centre of which passes the axis of the shaft 10. The spherical cam 21 features two complementary profiles 22, 23 acting respectively on two cam sensor rollers 24, 25 mounted in a freely rotatable manner at the free ends of the arms 26, 27 of a bellcrank lever 28.

The lever 28 is pivoted to a shaft 29 lying in the same plane as the shaft 10 and perpendicular thereto.

It will thus be seen that the continuous rotary movement of the shaft 10, through the agency of the spherical cam 21 with complementary profiles 22, 23 is converted into an oscillating movement positively controlled by the bellcrank lever 28.

The spherical cam and its complementary profiles 22-23 can be considered to be homologues of known complementary cams, such as the cams 15-16. These latter can be considered as an indeterminate case of spherical cam, in which the cam radius is infinite.

In the particular application shown in Figure 1 of the drawings, the bellcrank lever 28, through the intermediary of a kinematic chain indicated overall by 30, moves the entrainment slat of the gripper 31. The linkage provides that the lever 28 is connected by a coupling rod 35 to the sector gear 34 pivoted at 39. The sector gear 34 engages the pinion 38 solid with the wheel 33 the teeth of which engage the slat 31 so as to move it in a reciprocating direction as indicated by the arrow 32.

The coupling or connecting rod 35 can be advantageously pivoted in a position-wise registrable manner to an extension 36 of the bellcrank lever 28; to vary the distance between selvedges (i.e. weave width) it will suffice simply to register the pivoting position of the connecting rod 35 along the slot 37 of the extension 36. The position-wise registration of one end of the connecting rod 35 along the slot 37 in fact alters the angle of oscillation of the sector gear 34. As will be evident, if such movement-amplitude registration is not required, the sector gear 34 can also be simply solid with the lever 28.

## Claims

1. Device for converting a continuous rotary movement of a first shaft (10) in a reciprocating rectilinear movement of a weft thread picking gripper (13) in a textile loom, said gripper (13) being solid with a element (31) pushed by a chain of gears which engages with a sector gear (34) oscillated through levers operated by the rotation of a cam (21) driven by the first shaft (10) characterized in

   that said cam (21) is a spherical cam, on two complementary profiles of which there simultaneously act two cam sensors of a oscillating bellcrank lever (28) which is pivoted, in an intermediate position between the said two sensors, to a second shaft (29) lying in the same plane as the shaft (10) and perpendicular thereto, said oscillating lever (28) being operationally connected to said gear sector (34).

2. Device as decribed in claim 1, therein the said sector gear is moved by the said lever through the intermediary of a kinematic connection suitable for varying the amplitude ratio of the oscillations of the lever and of the sector gear.

## Revendications

1. Dispositif destiné à transformer un mouvement rotatif continu d'un premier arbre (10) en un mouvement rectiligne alternatif d'une pince (13) de prise du fil de trame dans un métier à tisser, ladite pince (13) étant solidaire d'un élément (31) poussé par un train d'engrenages qui est en prise avec un secteur denté (34) mis en oscillation par l'intermédiaire de leviers commandés par la rotation d'une came (21) elle-même entraînée par un premier arbre (10), caractérisé en ce que

ladite came (21) est une came sphérique, sur deux profils complémentaires de laquelle agissent simultanément deux contre-cames appartenant à un levier coudé oscillant (28) qui est articulé, en un point intermédiaire entre les deux contre-cames, sur un deuxième arbre (29) contenu dans le même plan que l'arbre (10) et perpendiculaire à celui-ci, ledit levier oscillant (28) étant fonctionnellement relié audit secteur denté (34).

2. Dispositif selon la revendication 1, dans lequel ledit secteur denté est mis en mouvement par ledit levier par l'intermédiaire d'une chaîne cinématique appropriée pour faire varier le rapport d'amplitude des oscillations du levier et de celle du secteur denté.

**Patentansprüche**

1. Einrichtung zur Umwandlung einer kontinuierlichen Drehbewegung einer ersten Welle (10) in eine geradlinige Hin- und Herbewegung eines Schußfadeneinsetzgreifers (13) in einem Webstuhl, wobei der Greifer (13) einteilig mit einem Teil (31) ausgeführt ist, der durch eine Zahnkette getrieben wird, die mit einem Zahnsektor (34) in Eingriff steht, der mittels Hebeln in Schwenkbewegung versetzt wird, die durch die Drehung eines durch die erste Welle (10) geführten Exzenters (21) bewegt werden, dadurch gekennzeichnet, daß der Exzenter (21) ein kugelförmiger Exzenter ist, auf dessen beiden komplementären Profile gleichzeitig zwei Exzentertaster eines hin- und herbewegten Winkelhebels (28) einwirken, der in einer zwischen den beiden Exzentertastern liegenden Stelle an einer zweiten Welle (29) angelenkt ist, die in derselben Ebene der Welle (10) und senkrecht dazu liegt, wobei der hin- und herbewegte Hebel (28) mit dem Zahnsektor (34) wirksam verbunden ist.

2. Einrichtung nach Anspruch 1, bei der der Zahnsektor durch den Hebel mittels einer kinematischen Verbindung bewegt wird, die dazu geeignet ist, das Schwingungsweitenverhältnis des Hebels und des Zahnsektors zu ändern.

Fig.1

Fig.2

Fig.3

EP 0 293 965 B1